# EUROPEAN PATENT APPLICATION

(11) **EP 2 634 736 A1**
(43) Date of publication of application: **04.09.2013**
(21) Application number: 12425048.1
(22) Date of filing: 29.02.2012
(51) Int. Cl.: G06Q 20/00

(54) **Computer network, electronic transactions cloud and computer-implemented method for secure electronic transactions**

(71) Applicant: Accenture Global Services Limited, Dublin 4 (IE)
(72) Inventor: Andreoli, Giorgio, 00139 Roma (IT); Dini, Marco, San Felice 20090 Segrate (IT); Mutarelli, Gabriele, 00139 Roma (IT)
(74) Representative: Müller-Boré & Partner Patentanwälte

(57) **Abstract**

The present application relates to a computer network for secure processing of a request from a mobile application on a mobile computing device, comprising:
a first communications channel over which an electronic transactions cloud receives the request from the mobile application for processing an electronic transaction between a first entity and a second entity and over which a request for validation of a secure transaction code for processing the electronic transaction is received from the mobile application;
a second communications channel over which variable data from the request from the mobile application for processing the electronic transaction is verified based on corresponding variable data from a data store of the first entity;
a third communications channel over which instructions to process the electronic transaction are sent to an electronic data store of the second entity and the secure transaction code is sent to the electronic data store of the second entity for validation;

wherein if the secure transaction code is valid, the electronic transactions cloud receives a receipt confirming completion of the electronic transaction from the electronic data store via the third communications channel and, if the secure transaction code is not valid, the electronic transactions cloud receives an error message from the electronic data store indicating the secure transaction code is invalid via the third communications channel.

## Description

This application relates to a network, an electronic transactions cloud or platform, and computer implemented method.

### Background

Networks may be subject to attacks from malicious sources intending to do harm to the network or to gain access to private data. For example, a "passive attack" may include a network intruder intercepting data in the network. Another example is an "active attack" which may include a network intruder initiating commands to disrupt normal network operations.

Network security may include policies adopted by a network administrator to prevent and monitor misuse of information, unauthorized access, and/or the denial of access to computer-network resources. The policies adopted by network administrators typically relate to protection of resources and data within one organization. For example, network security policies may be adapted to prevent employees of an organization from copying data onto a portable flash drive or the like.

However, when conducting electronic transactions between separate entities, it becomes difficult to manage network security across the network. Further, especially since electronic transactions may relate to access of financial data and even the monetary funds of entities, it becomes all the more important to be impermeable to malicious network attacks.

For example, business entities selling products and/or services to other business entities participate in business-to-business (B2B) commerce. For example, a business entity, i.e. a manufacturer, may sell a number of widgets to another business entity, i.e. a wholesaler. Field sales representatives representing business entities may sell products and/or services to other business entities. For example, a field sales representative representing a manufacturer may physically go to the premises of a wholesaler to sell a number of widgets. During these B2B transactions, field sales representatives are typically expected to resolve open invoices from previous B2B transactions with the wholesaler, which usually involves collecting cash payments. Field sales representatives may be expected to take new orders for widgets as well. In the course of a day, a field sales representative may go to several different business entities to perform these duties, which may result in collecting large quantities of cash payments and perhaps taking many new orders. The field sales representatives may not be able to immediately go to a bank to deposit the cash payments and thus may be vulnerable to leakages in cash collection from loss or fraud, therefore resulting in lost revenue.

Invoice data from business applications are generally accessible at the location of the business entity, i.e. at the premises of the business entity, or at a computer having a secure connection to a server hosting the business application containing the invoice data. Thus, to access such invoice data, the field sales representative may physically go to the premises of the business entity to use a terminal having access to the invoice data or remotely connect to a server hosting the business application by setting up a secure connection using a computer, due to network security policies. Thus, there is a lack of flexibility and security that field sales representatives face when performing B2B transactions in the field where it may not be feasible or possible to physically go to the premises of the business entity.

### Brief Description of the Drawings

Details of one or more implementations are set forth in the accompanying exemplary drawings and exemplary description below. Other features will be apparent from the description and drawings, and from the claims.
Figure 1 shows an exemplary system architecture diagram, according to an embodiment;
Figure 2A shows an exemplary screen view, according to an embodiment;
Figure 2B shows another exemplary screen view, according to an embodiment;
Figure 3 shows an exemplary data flow diagram, according to an embodiment;
Figure 4 shows an exemplary method, according to an embodiment;
Figure 5 shows an exemplary computer system and/or computer network system for implementing a computer network or computer system and a method as shown in Figs. 1 to 4, according to an embodiment; and
Figure 6 shows another exemplary computer system and/or computer network system for implementing a computer network or computer system and a method as shown in Figs. 1 to 4, according to an embodiment.

### Detailed Description

In the following, a detailed description of embodiments will be given with reference to the drawings. It should be understood that various modifications to the embodiments may be made. In particular, one or more elements of one or more embodiments may isolated from each other and may be combined and/or used in other embodiments to form new embodiments.

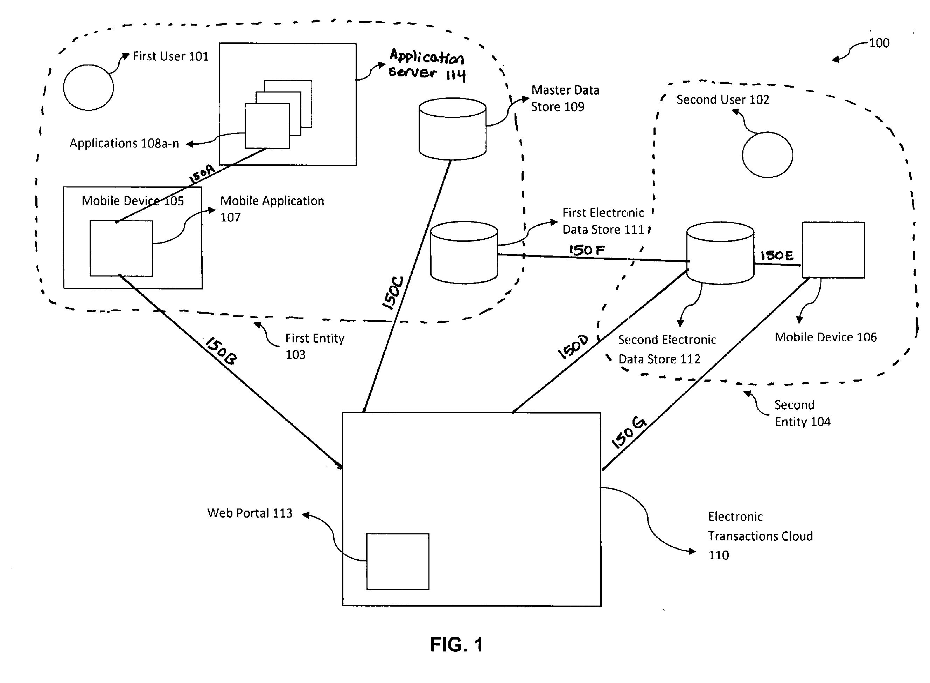

**Figure 1** shows an exemplary system architecture diagram 100 of an exemplary computer network enabling communications between mobile applications, mobile devices, servers, data stores, other network-enabled devices and an electronic transactions cloud 110, via communications channels 150a-g comprising the network.

The electronic transactions cloud 110, also referred to as an electronic transactions platform herein, may comprise an example of cloud computing. Cloud computing provides computation, software, data access, storage resources, etc. without requiring cloud users, i.e. the mobile applications, mobile devices, servers, data stores, etc. to know the location and other details of the computing infrastructure. Thus, the electronic transactions cloud 110 may comprise delivery of computing as a service where shared resources, software, and information are provided to computers and other devices as a service over the network, comprising at least communications channels 150a-g. Access to cloud-based applications, e.g. electronic transactions cloud 110, may be provided through a web browser or portal accessed from fixed or mobile devices or a light-weight desktop application or mobile application, such as mobile application 107, while the business application and data are stored on servers at a remote location, such as, for example, application server 114.

Accordingly, the electronic transactions cloud 110 may comprise services provided by a third party to business entities, such as, e.g., a first entity 103 and a second entity 104. The services provided by the electronic transactions cloud 110 may be related to business-to-business (B2B) commerce transactions such as secure electronic transactions including secure electronic payments and other electronic business and/or financial transactions between the business entities, e.g., the first entity 103 and the second entity 104, as further described below.

The communications channels 150a-g may comprise the network. Thus, the components of the network may be interconnected by any form of digital data communication (for example, communications channels 150a-g comprising the computer network). Thus, each of the communications channels 150a-g may connect two or more network-enabled devices on the network. The network may include connections to mobile applications, mobile devices, servers, data stores and other network-enabled devices. The network may comprise one or more types of networks including a local area network (LAN), a wide area network (WAN), and the internet. For example, communications channels, e.g., communications channels 150b and 150d, may connect to the Internet via secure protocol (HTTPS).

According to an embodiment, a first user 101 representing the first business entity, e.g., the first entity 103, and a second user 102 representing the second business entity, e.g., the second entity 104, is shown in figure 1. Business entities may be entities selling products and/or services to other business entities, thereby participating in business-to-business (B2B) commerce. For example, a business entity, i.e. a manufacturer, may sell a number of widgets to another business entity, i.e. a wholesaler. For simplicity, in this application the term entity may also refer to a business entity.

The first user 101 may have a mobile device 105 such as a smartphone, a tablet, a personal digital assistant (PDA), etc. The second user 102 may have a mobile device 106 such as a simple cellular phone enabled to receive messages such as short message service (SMS) messages, or a smartphone, a tablet, a PDA, etc. Either or both mobile devices 105 and 106 may specifically be mobile computing devices. For simplicity, in this application the term mobile device may also refer to a mobile computing device.

According to an embodiment, the mobile application 107 may reside on the mobile device 105 of the first user 101. The mobile application 107 may be pre-installed on the mobile device 105 or may be downloaded onto the mobile device 105 via communications channels 150a-g comprising the network. The mobile application 107 may access and/or connect to business data and/or functionality of one or more applications 108a-n associated with the first entity 103 via communications channel 150a. For example, the mobile application 107 may connect to the applications 108an stored on an application server 114 associated with the first entity 103 via communications channel 150a. Alternatively, the mobile application 107 may also be a web portal providing access to the one or more applications 108a-n via communications channel 150a.

The applications 108a-n may be coupled to a data storage device, e.g. master data store 109. The master data store 109 may comprise a relational database, a cube, a cloud, etc. The master data store 109 may store master data for the applications 108a-n and for the mobile application 107. For example, the master data store 109 may store master data associated with one or more business entities with which the first entity 103 participates in B2B commerce, including said second entity 104. For example, the master data may include open invoices, closed invoices, amount owed, etc. associated with the second entity 104, and other business entities.

The first entity 103 may also be associated with a first electronic data store 111, separate from the master data store 109. The second entity 104 may be associated with a second electronic data store 112. The first electronic data store 111 and/or the second electronic 112 may be electronically-available bank accounts, wallet managers or other financial accounts to/from which money can be electronically transferred.

Communications channel 150b may connect the mobile application 107 and the electronic transactions cloud 110. Communications channel 150c may connect the electronic transactions cloud 110 and the master data store 109. Communications channel 150d may connect the second electronic data store 112 and the electronic transactions cloud 110. Communications channel 150e may connect the second electronic data store 112 and the mobile device 106 of the second user 102. Communications channel 150f may connect the second electronic data store 112 with the first electronic data store 111. Communications channel 150g may connect the electronic transactions cloud 110 and the mobile device 106 of the second user 102.

### Registration

According to an embodiment, for processing electronic transactions, entities may be provided with a unique identifier for an electronic data store associated with the entity. The unique identifier may identify account information about an electronic bank account, wallet manager, or other financial account, such as, e.g. said first electronic data store 111 or said second electronic data store 112. The account information may comprise, for example, an IBAN or a credit card number, to/from which electronic payments may be transferred.

Alternatively, entities may register with the electronic transactions cloud 110 through the web portal 113 as shown in figure 1. The web portal 113 may be provided by the electronic transactions cloud 110. For example, a business entity, such as, e.g., the first entity 103 and/or the second entity 104, may enter data into an electronic form provided by the web portal 113, including identification data such as name, physical address, phone, email address, etc.; a unique identifier such as username and password or a unique number; and/or electronic data store identification data regarding an electronic data store associated with the business entity as described above. In an alternative embodiment, the electronic transactions cloud 110 may provide in the electronic form a unique identifier to the registering business entity.

After completing the registration process, the business entity, e.g. the first entity 103 and/or the second entity 104, may receive an SMS message or the like providing a registration notification notifying the business entity that the registration of the business entity with the electronic transactions cloud 110 is complete.

### Processing Electronic Transactions

According to an embodiment, the first user 101 may visit the premises of the second user 102, i.e. the premises of the second entity 104, to take additional orders for widgets or to collect payments for past orders of widgets, i.e. to settle one or more open invoices. While at the premises of the second entity 104, the first user 101 may open the mobile application 107 on the mobile device 105 of the first user 101.

According to an embodiment, the first user 101 may access master data stored in the master data store 109 via communications channel 150a by opening the mobile application 107 and connecting to the one or more applications 108a-n. For example, the first user 101 may access master data associated with the second entity 104 by selecting the second entity 104 from a group of available business entities in the mobile application 107. Upon selection, the mobile application 107 may communicate via communications channel 150a with the one or more applications 108a-n to access the master data store 109. The mobile application 107 may retrieve the master data associated with the second entity 104 from the master data store 109 via the one or more applications 108a-n. The master data, including open invoices, closed invoices, amount owed, etc., may be displayed in the mobile application 107 on the mobile device 105 of the first user 101. That way, the first user 101 and the second user 102 may view open invoices together and agree on which of the open invoices to pay at the time of the visit.

Further, according to an embodiment, upon selecting the second entity 104 from a group of available business entities in the mobile application 107, the mobile application 107 may also retrieve a credit status of the second entity 104 from the master data store 109 via the communications channel 150a. For example, the mobile application 107 may connect to the one or more applications 108a-n via communications channel 150a to access the master data store 109 to retrieve credit status data of the second entity 104. Advantageously, a real-time view of open invoices and credit status of the second entity 104 may be obtained by the first user 101 while at the premises of the second entity 104.

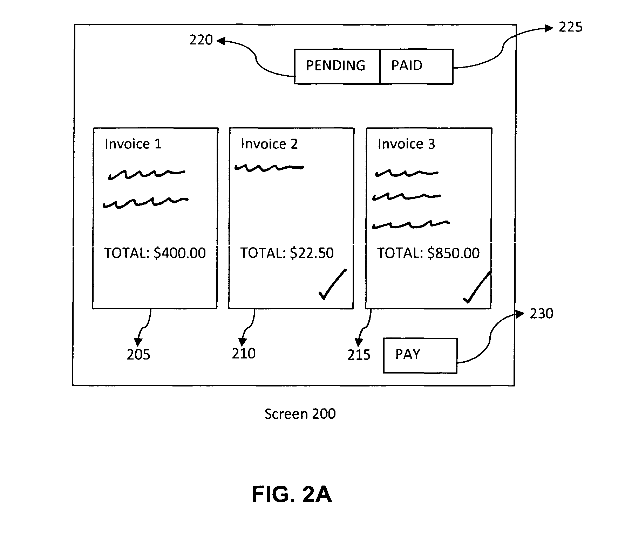

**Figure 2A** illustrates an example of a screen 200 presented by the mobile application 107, upon selection of a specific business entity, e.g., the second entity 104, from the group of available business entities. The screen 200 displays a portion of the master data associated with the second entity 104, retrieved from the master data store 109. For example, in figure 2A, open invoices 205, 210 and 215 are displayed since a PENDING view 220 is selected. Alternatively, the first user 101 may select a PAID view 225 to view invoices of the second entity 104 that have already been paid, i.e., closed invoices.

After reviewing the open invoices 205, 210 and 215 in the PENDING view 220 of screen 200 of the mobile application 107 displayed on the mobile device 105 of the first user 101, and once an agreement as to which of the open invoices to pay is made between the first user 101 and the second user 102, the first user 101 may select the open invoices to be paid from the open invoices 205, 210 and 215 displayed on the screen 200. For example, in figure 2A, open invoices 210 and 215 to be paid are selected on the screen 200, indicated by a checkmark in this example. Once at least one open invoice has been selected on the screen 200, a PAY button 230 may appear on the screen 200. The PAY button 230 may be selected to proceed with payment of the at least one selected open invoice, e.g., open invoices 210 and 215.

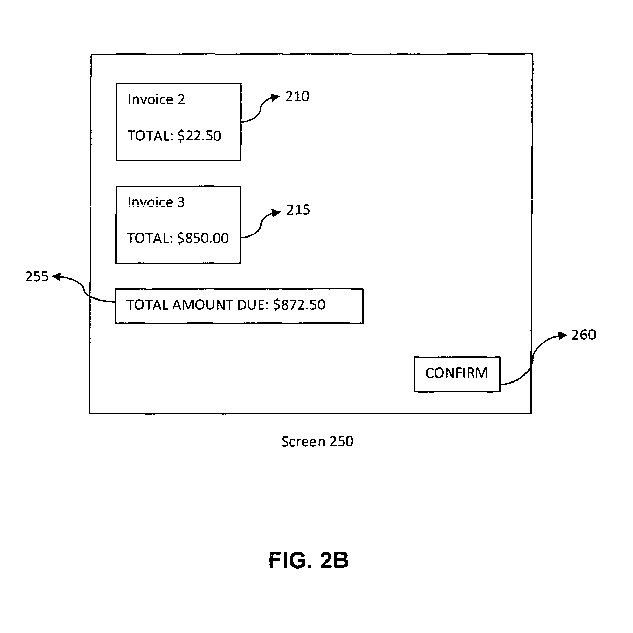

Once the open invoices to be paid have been selected, a view of the open invoices to be paid and a total amount due for the selected open invoices to be paid may be displayed on the mobile device 105. For example, in figure 2B, the selected open invoices 210 and 215 may be displayed on screen 250 of the mobile application 107. A total amount due 255 corresponding to a sum of the selected open invoices 210 and 215 is also displayed on screen 250. The second user 102 may view the total due amount 255, and select a CONFIRM button 260 to proceed with an electronic payment of the total amount due 255.

Upon selecting the CONFIRM button 260 on screen 250, thereby confirming the total amount due 255 to be paid by the second entity 104, a request is made from the mobile application 107 on the mobile device 105 to the electronic transactions cloud 110 via communications channel 150b for processing an electronic transaction, i.e. a payment of the total amount due 255.

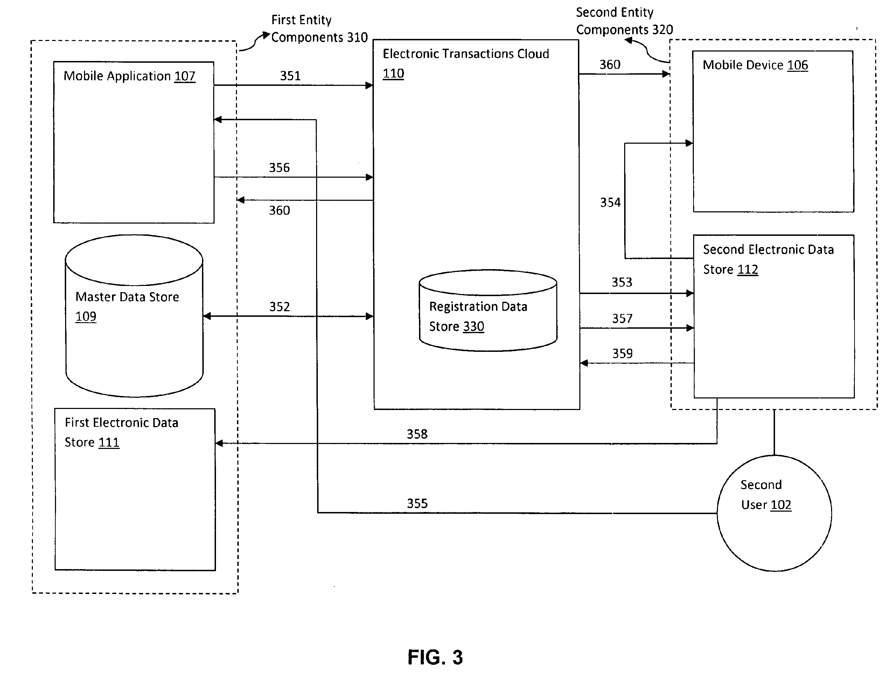

**Figure 3** shows a data flow diagram 300 illustrating the data flow between components related to the first entity 103 of figure 1, the electronic transactions cloud 110 of figure 1 and the components related to the second entity 104 of figure 1, after a request to process an electronic transaction, i.e. to pay a total amount due, is made from the mobile application 107 on the mobile device 105 to the electronic transactions cloud 110 via communications channel 150b, according to an embodiment. The components related to the first entity 103, generally first entity components 310, may include the mobile application 107, the master data store 109 and the first electronic data store 111 of the first entity 103. The components related to the second entity 104, generally second entity components 320, may include the mobile device 106 of the second user 102 and the second electronic data store 112 of the second entity 104.

At step 351, the electronic transactions cloud 110 receives a request from the mobile application 107 via communications channel 150b to process an electronic transaction. For example, upon selecting the CONFIRM button 260 on screen 250 in figure 2B, thereby confirming the total amount due 255 to be paid by the second entity 104, the mobile application 107 makes a request to the electronic transactions cloud 110 which is sent over the communications channel 150b of the network. The request may comprise a request for processing an electronic transaction, e.g., processing an electronic payment of a total amount due, over the network.

Upon receiving the request, the electronic transactions cloud 110 verifies variable data from the request received at step 351. The variable data may comprise the identity of the first user 101 and the identity of the second user 102. The electronic transactions cloud 110 may extract variable data such as identification data for the first user 101 and the second user 102 from the request for processing the electronic transaction received at step 351. The electronic transactions cloud 110 may retrieve corresponding variable data such as identification data for the first user 101 and the second user 102 from a registration data store 330 stored in the electronic transactions cloud 110. For example, the registration data store 330 may store identification data for all business entities registered with and having access to the electronic transactions cloud 110, including the first user 101 and the second user 102. For example, the identification data may comprise a username and password or a unique ID number from the first user 101 and from the second user 102. The electronic transactions cloud 110 may then compare the retrieved identification data to identification data extracted from the request for processing the electronic transaction.

At step 352, the electronic transactions cloud 110 may also verify other variable data, such as a total amount due corresponding to a sum of open invoices to be paid, from the request for processing the electronic transaction received at step 351. The electronic transactions cloud 110 may extract the other variable data, e.g. the total amount due, from the request for processing the electronic transaction received at step 351. The electronic transactions cloud 110 may retrieve corresponding variable data, i.e. corresponding master data, from the master data store 109 via communications channel 150c. For example, the electronic transactions cloud 110 may retrieve open invoices for the business entity from the master data store 109. The electronic transactions cloud 110 may then compare the extracted variable data and the retrieved corresponding variable data. For example, the electronic transactions cloud 110 may verify the consistency of the total amount due extracted from the request for processing the electronic transaction with the open invoices retrieved from the master data store 109.

At step 353, if the variable data extracted from the request for processing the electronic payment matches the corresponding variable data retrieved from the master data store 109, i.e. if the results of the comparisons made at step 351 and step 352 are positive, the electronic transactions cloud 110 may send a request via communications channel 150d to the second electronic data store 112 of the second entity 104 instructing the second entity 104 to process the electronic transaction. For example, if the first user 101 and the second user 102 from the request received at step 351 are authenticated and the sum of the open invoices retrieved from the master data store 109 is consistent with the total amount due extracted from the request received at step 351, the electronic transactions cloud 110 may send a request via communications channel 150d to the second electronic data store 112 of the second entity 104 to pay the total amount due to the first electronic data store 111 of the first entity 103.

At step 354, the second electronic data store 112 of the second entity 104 may send to the mobile device 106 of the second user 102 an electronic transaction request and a secure transaction code to complete the electronic transaction via communications channel 150e. The electronic transaction request may provide to the second user 102 a summary of the variable data, e.g. total amount due and the open invoices associated with the total amount due. The secure transaction code may comprise a code authorizing the processing of the electronic transaction. The secure transaction code may, for example, be a PiN (personal identification number) or an OTP (one-time personal identification number). The OTP may have an expiration time that may be configurable for different entities. For example, the OTP may expire if not used after one minute for the second entity 104. The electronic transaction request and the secure transaction code may be sent to the mobile device 106 via a message, such as an SMS message, or the like.

At step 355, upon receipt of the electronic transaction request and the secure transaction code, the second user 102 may communicate the secure transaction code to the first user 101 for insertion into the mobile application 107 on the mobile device 105 of the first user 101. The first user 101 may enter the secure transaction code into the mobile application 107 on the mobile device 105.

At step 356, the entry of the secure code into the mobile application 107 by the first user 101 at step 355 may trigger a request to be sent from the mobile application 107 to the electronic transactions cloud 110 for validation of the secure transaction code over communications channel 150b.

At step 357, the electronic transactions cloud 110 may send the secure transaction code to the second electronic data store 112 for validation over communications channel 150d. This secure transaction code is compared with the secure transaction code that the second electronic data store 112 sent to the mobile device 106 of the second user 102 at step 354. If this secure transaction code matches the secure transaction code that the second electronic data store 112 sent to the mobile device 106 of the second user 102 at step 354, the secure transaction code is valid and the electronic transaction is authorized. If, however, this secure transaction code does not match the secure transaction code that the second electronic data store 112 sent to the mobile device 106 of the second user 102 at step 354, the secure transaction code is invalid and the electronic transaction is not authorized. An error message indicating that the secure transaction code is invalid and the electronic transaction is not authorized may be sent from the second electronic data store 112 to the electronic transactions cloud 110 via communications channel 150d, for sending a notification of the same to the mobile application 107 from the electronic transactions cloud 110 (not shown in figure 3).

At step 358, if the secure transaction code is determined to be valid at step 357, the second electronic data store 112 authorizes a transaction from the second electronic data store 112 of the second entity 104 to the first electronic data store 111 of the first entity 103 via communications channel 150f. For example, the second electronic data store 112 may authorize an electronic payment to be made from the second electronic data store 112 of the second entity 104 to the first electronic data store 111 of the first entity 103 via communications channel 150f.

At step 359, the second electronic data store 112 may send a receipt to the electronic transactions cloud 110 via communications channel 150d. For example, the second electronic data store 112 may notify the electronic transactions cloud 110 of completion of the electronic transaction. If, however, the electronic transaction has not been completed at step 358, the second electronic data store 112 may send an error message to the electronic transactions cloud 110, via communications channel 150d, indicating that the electronic transaction has not been completed.

At step 360, if the electronic transactions cloud 110 received a receipt at step 359, the electronic transactions cloud 110 may send a notification such as an SMS message, email or the like to an account, such as an email account, associated with the first entity 103, confirming the electronic transaction was completed, i.e. the electronic payment was made from the second electronic data store 112 of the second entity 104 to the first electronic data store 111 of the first entity 103, via communications channel 150b. For example, the electronic transactions cloud 110 may send an SMS message to an account associated with the mobile application 107. The notification may also be received by another entity not depicted in the figures. In an alternative embodiment, the notification may include details from the receipt received by the electronic transactions cloud 110 at step 359.

If, however, the electronic transactions cloud 110 received an error message at step 359 indicating that the electronic transaction has not been compieted at step 358, the electronic transactions cloud 110 may send a notification such as an SMS message, email or the like to an account, such as an email account, associated with the first entity 103, indicating that the electronic payment transaction has not been completed, via communications channel 150b. For example, the electronic transactions cloud 110 may send an SMS message to an account associated with the mobile application 107 (part of the first entity components 310). The notification may also be received by another entity not depicted in the figures.

Also at step 360, the electronic transactions cloud 110 may send a notification such as an SMS message, email or the like indicating the electronic transaction was completed or indicating that the secure code is invalid and/or the electronic transaction has not been completed to an account, such as an email account, associated with the second entity 104, via communications channel 150g. For example, the electronic transactions cloud 110 may send an SMS message to an account associated with the mobile device 106 of the second user 102 (part of the second entity components 320). The notification may also be received by another entity not depicted in the figures.

Advantageously, electronic transactions substitute physical money collection. Money transferred from business entity to business entity is completed in real-time and, therefore, the electronic payment transactions completed efficiently and quickly. The electronic payment transactions are also monitored and controlled. Thus, field sales representatives are not vulnerable to cash leakages, since they are not transporting large quantities of cash payments. Further, if there are cash leakages, i.e. lost cash or fraud, then they are clearly identifiable.

Moreover, advantageously, the electronic payment transaction is made secure by a secure transaction code being sent only to the authorizing entity, i.e. the second entity 104. Therefore, unauthorized payments are eliminated. Moreover, confirmation of completed electronic payment transactions is sent to both parties involved in the electronic payment transaction.

Further, the electronic transactions cloud 110 may be integrated with already commercially available solutions such as an electronic wallet, components for user profiling (where profiling is allowed) and systems for recording each transaction for each single user, history tracking features, etc. In particular, by integrating the described embodiment with user profiling and metering components, managing payments to the first entity 103 and the like can be tracked and monitored by stakeholders of the first entity 103.

### Reconciliation

On the backend, as shown in figure 1, the electronic transactions cloud 110 may also reconcile electronic transactions with records in the master data store 109. The electronic transactions cloud 110 may reconcile electronic payments with the open invoices for a specific business entity, e.g., the first entity 103. For example, the electronic transactions cloud 110 may access the master data store 109 via communications channel 150c to retrieve records associated with the open invoices and correlate completed electronic payments with the retrieved open invoice records. This correlation may be stored in the master data store 109. Further, the open invoice records may be changed to closed invoice records in the master data store 109, after an electronic payment is reconciled with the open invoice record. Notification of the reconciliation may be sent to the first entity 103. Advantageously, paper collection and paper management processes are eliminated and the reconciliation process is automated. Further, the first entity 103 may be able to verify the status of open invoices and reconciliation on a web portal 113 maintained by the electronic transactions cloud 110.

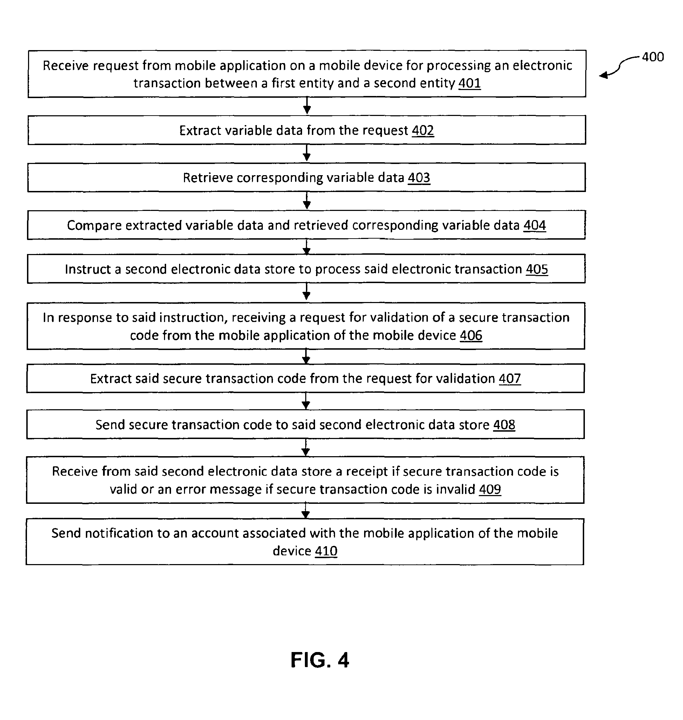

**Figure 4** shows an exemplary method 400, according to an embodiment. The method 400 illustrates the steps involved in processing an electronic transaction between a first business entity, e.g., a first entity such as an accounts receivable owner or payee, and a second business entity, e.g., a second entity such as a payor. In particular, once open invoices to be paid have been agreed upon by a representative of the first entity, e.g., a first user, and a representative of the second entity, e.g., the second user, and selected on a mobile application on a mobile device of the first user, and once a total amount due for the selected open invoices to be paid is confirmed on the mobile application of the mobile device of the first user, the exemplary method 400 is performed. More specifically, the exemplary method 400 is performed after a request to process an electronic transaction, e.g., to pay a total amount due, is made from the mobile application on the mobile device of the first user to an electronic transactions cloud.

At step 401, the electronic transactions cloud receives a request from the mobile application on the mobile device for processing an electronic transaction between the first entity and the second entity, over a first communications channel. For example, the electronic transactions cloud may receive a request for payment of a total amount to be paid bay the second entity to a first entity from the mobile application on the mobile device of the first user

At step 402, the electronic transactions cloud extracts variable data from the received request. The variable data may comprise the identity of the first user and the identity of the second user and/or a total amount due corresponding to a sum of open invoices to be paid.

At step 403, the electronic transactions cloud retrieves corresponding variable data from a data store associated with the first entity, over a second communications channel. The corresponding variable data may comprise the identity of the first user and the identity of the second user retrieved from a registration data store and/or a total amount due corresponding to a sum of open invoices to be paid retrieved from a master data store. The data store may be the master data store and/or the registration data store.

At step 404, the electronic transactions cloud compares the retrieved corresponding variable data with extracted variable data. The extracted variable data comprising the identity of the first user and the identity of the second user may be compared with the corresponding variable data comprising the identity of the first user and the identity of the second user retrieved from the registration data store. The extracted variable data comprising a total amount due corresponding to a sum of open invoices to be paid may be compared with the corresponding variable data comprising a total amount due corresponding to a sum of open invoices to be paid retrieved from the master data store.

At step 405, the electronic transactions cloud instructs, over a third communications channel, a second electronic data store to process said electronic transaction, unless the retrieved corresponding variable data does not match the extracted variable data. For example, if the extracted variable data and the corresponding variable data match, the electronic transactions cloud may instruct a second electronic data store to pay the total amount due to a first electronic data store.

At step 406, the electronic transactions cloud, in response to said instructing, receives a request for validation of a secure transaction code from the mobile application of the mobile device over the second communications channel. The secure transaction code may, for example, be a PIN (personal identification number) or an OTP (one-time personal identification number). The OTP may have an expiration time that be configured for different entities. For example, the OTP may expire if not used within one minute for the second entity.

At step 407, the electronic transactions cloud extracts said secure transaction code from the request for validation.

At step 408, the electronic transactions cloud sends, over the third communications channel, said secure transaction code to said second electronic data store for validation. This secure transaction code is compared by the second electronic data store with another secure transaction code that the second electronic data store sent previously to the mobile device of the second user associated with the second entity. If this secure transaction code matches the secure transaction code that the second electronic data store sent previously to the mobile device of the second user associated with the second entity, the secure transaction code is validated and the electronic transaction is authorized. If, however, the secure transaction codes do not match, the secure transaction code is invalid and the electronic transaction authorization is not authorized.

At step 409, the electronic transactions cloud receives from said second electronic data store a receipt indicating that the electronic transaction is completed. If, however, the electronic transaction is not completed, the electronic transactions cloud receives an error message indicating that the electronic transaction has not been completed over the third communications channel.

At step 410, if the electronic transactions cloud received a receipt at step 409, the electronic transactions cloud sends a notification such as a message, email or the like indicating the electronic transaction was completed to an account, such as an email account, associated with the first entity. For example, the electronic transactions cloud may send an SMS message to an account associated with the mobile application of the mobile device of the first user via said first communications channel. In an alternative embodiment, the notification may include details from the receipt received by the electronic transactions cloud. If the electronic transactions cloud received a receipt at step 409, the electronic transactions cloud sends an error message indicating the electronic transaction was not completed to an account, such as an email account, associated with the first entity.

At step 411, optionally, the electronic transactions cloud sends a notification such as a message, email or the like indicating the electronic transaction was completed or indicating that the electronic transaction has not been completed, to an account, such as an email account, associated with the second entity. For example, the electronic transactions cloud may send an SMS message to an account associated with the mobile device of the second user via a fourth communications channel.

Advantageously, cash money circulation is drastically reduced allowing business entities to maintain control of their operations. Electronic payment transactions substitute B2B cash collection which increases client goods delivery speed and avoids client liquidity risks. Further, clients may have real-time control of payment transactions. Back office reconciliation will be simplified and electronically enhanced. Each step of the process may be monitored in real-time by authorized personnel. Further, high security is provided by internet security standards (HTTPS) and transaction are secured by the secure transaction code, e.g. a PIN or OTP. The secure transaction codes are only sent to the buyer and may have an expiration time that may be configurable for different entities. For example, the OTP may expire after one minute. Further, cross-border payments can be enabled for multi-national companies.

One or more of the steps of the methods described herein and other steps described herein and one or more of the components of the systems described herein may be implemented as computer code stored on a computer readable medium, such as the memory and/or secondary storage, and executed on a computer system, for example, by a processor, application-specific integrated circuit (ASIC), or other controller. The computer readable medium may be a non-transitory medium, such as a storage device. The code may exist as software program(s) comprised of program instructions in source code, object code, executable code or other formats. Examples of computer readable medium include conventional computer system RAM (random access memory), ROM (read only memory), EPROM (erasable, programmable ROM), EEPROM (electrically erasable, programmable ROM), hard drives, and flash memory.

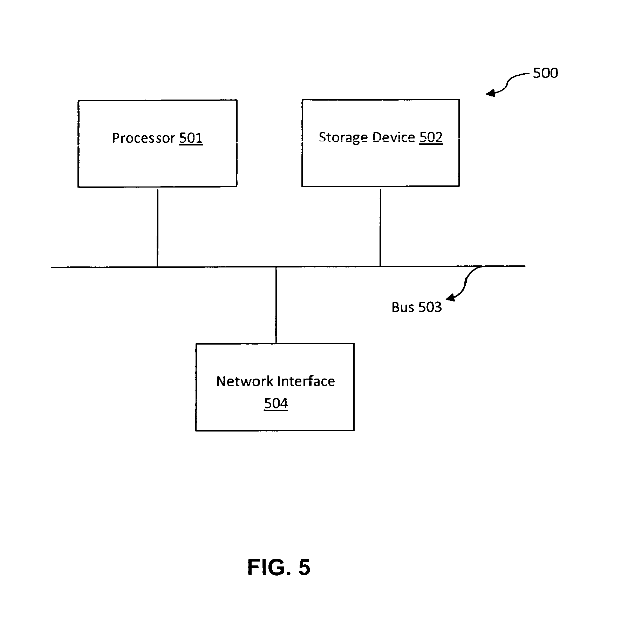

**Figure 5** shows an exemplary system for implementing the method including a general purpose computing device in the form of a conventional computing environment. Figure 5 shows a computer system 500 that may be used as a hardware platform for executing one or more of the steps, methods, and functions described herein that may be embodied as software stored on one or more computer readable storage devices. The computer system 500 includes a processor 501 or processing circuitry that may implement or execute software instructions performing some or all of the methods, functions and other steps described herein. Commands and data from the processor 501 are communicated over a communication bus 503. The computer system 500 also includes a computer readable storage device 502, such as random access memory (RAM), where the software and data for processor 501 may reside during runtime. The storage device 502 may also include non-volatile data storage. The computer system 500 may include a network interface 504 for connecting to a network. It is apparent to one of ordinary skill in the art that other known electronic components may be added or substituted in the computer system 500.

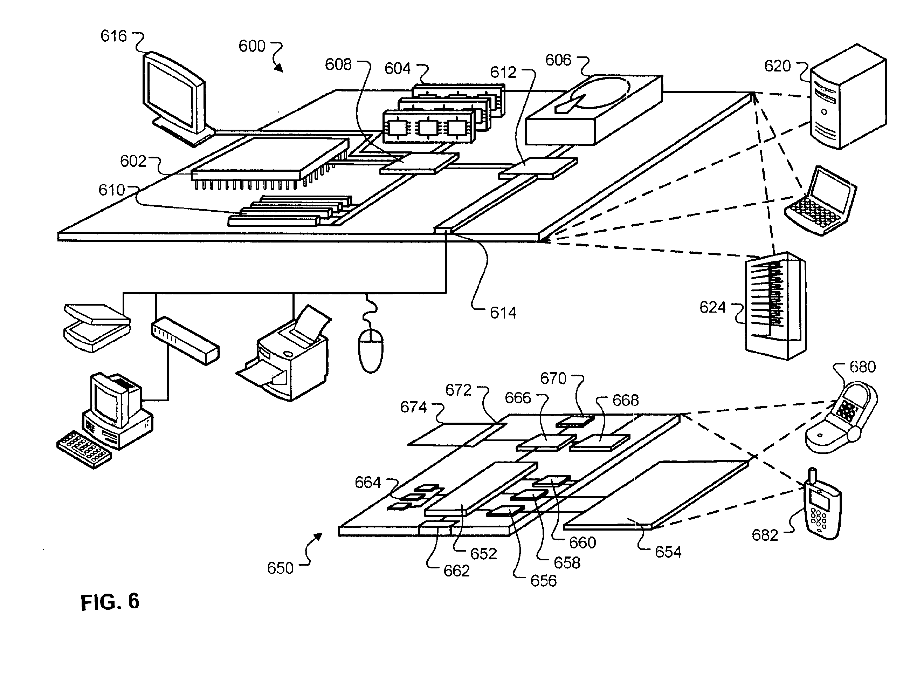

**Figure 6** shows an example of a computing device 600 and a mobile computing device 650 that can be used to implement the techniques described in this disclosure. The computing device 600 is intended to represent various forms of digital computers, such as laptops, desktops, workstations, personal digital assistants, servers, blade servers, mainframes, and other appropriate computers. The mobile computing device 650 is intended to represent various forms of mobile devices, such as personal digital assistants, cellular telephones, smart-phones, and other similar computing devices. The components shown here, their connections and relationships, and their functions, are meant to be examples only, and are not meant to be limiting.

The computing device 600 includes a processor 602, a memory 604, a storage device 606, a high-speed interface 608 connecting to the memory 604 and multiple high-speed expansion ports 610, and a low-speed interface 612 connecting to a low-speed expansion port 614 and the storage device 606. Each of the processor 602, the memory 604, the storage device 606, the high-speed interface 608, the high-speed expansion ports 610, and the low-speed interface 612, are interconnected using various busses, and may be mounted on a common motherboard or in other manners as appropriate. The processor 602 can process instructions for execution within the computing device 600, including instructions stored in the memory 604 or on the storage device 606 to display graphical information for a GUI on an external input/output device, such as a display 616 coupled to the high-speed interface 608. In other implementations, multiple processors and/or multiple buses may be used, as appropriate, along with multiple memories and types of memory. Also, multiple computing devices may be connected, with each device providing portions of the necessary operations (e.g., as a server bank, a group of blade servers, or a multiprocessor system).

The memory 604 stores information within the computing device 600. In some implementations, the memory 604 is a volatile memory unit or units. In some implementations, the memory 604 is a non-volatile memory unit or units. The memory 604 may also be another form of computer-readable medium, such as a magnetic or optical disk.

The storage device 606 is capable of providing mass storage for the computing device 600. In some implementations, the storage device 606 may be or contain a computer-readable medium, such as a floppy disk device, a hard disk device, an optical disk device, or a tape device, a flash memory or other similar solid state memory device, or an array of devices, including devices in a storage area network or other configurations. Instructions can be stored in an information carrier. The instructions, when executed by one or more processing devices (for example, processor 602), perform one or more methods, such as those described above. The instructions can also be stored by one or more storage devices such as computer- or machine-readable mediums (for example, the memory 604, the storage device 606, or memory on the processor 602).

The high-speed interface 608 manages bandwidth-intensive operations for the computing device 600, while the low-speed interface 612 manages lower bandwidth-intensive operations. Such allocation of functions is an example only. In some implementations, the high-speed interface 608 is coupled to the memory 604, the display 616 (e.g., through a graphics processor or accelerator), and to the high-speed expansion ports 610, which may accept various expansion cards (not shown). In the implementation, the low-speed interface 612 is coupled to the storage device 606 and the low-speed expansion port 614. The low-speed expansion port 614, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 600 may be implemented in a number of different forms, as shown in the figure. For example, it may be implemented as a standard server 620, or multiple times in a group of such servers. In addition, it may be implemented in a personal computer such as a laptop computer 622. It may also be implemented as part of a rack server system 624. Alternatively, components from the computing device 600 may be combined with other components in a mobile device (not shown), such as a mobile computing device 650. Each of such devices may contain one or more of the computing device 600 and the mobile computing device 650, and an entire system may be made up of multiple computing devices communicating with each other.

The mobile computing device 650 includes a processor 652, a memory 664, an input/output device such as a display 654, a communication interface 666, and a transceiver 668, among other components. The mobile computing device 650 may also be provided with a storage device, such as a micro-drive or other device, to provide additional storage. Each of the processor 652, the memory 664, the display 654, the communication interface 666, and the transceiver 668, are interconnected using various buses, and several of the components may be mounted on a common motherboard or in other manners as appropriate.

The processor 652 can execute instructions within the mobile computing device 650, including instructions stored in the memory 664. The processor 652 may be implemented as a chipset of chips that include separate and multiple analog and digital processors. The processor 652 may provide, for example, for coordination of the other components of the mobile computing device 650, such as control of user interfaces, applications run by the mobile computing device 650, and wireless communication by the mobile computing device 650.

The processor 652 may communicate with a user through a control interface 658 and a display interface 656 coupled to the display 654. The display 654 may be, for example, a TFT (Thin-Film-Transistor Liquid Crystal Display) display or an OLED (Organic Light Emitting Diode) display, or other appropriate display technology. The display interface 656 may comprise appropriate circuitry for driving the display 654 to present graphical and other information to a user. The control interface 658 may receive commands from a user and convert them for submission to the processor 652. In addition, an external interface 662 may provide communication with the processor 652, so as to enable near area communication of the mobile computing device 650 with other devices. The external interface 662 may provide, for example, for wired communication in some implementations, or for wireless communication in other implementations, and multiple interfaces may also be used.

The memory 664 stores information within the mobile computing device 650. The memory 664 can be implemented as one or more of a computer-readable medium or media, a volatile memory unit or units, or a non-volatile memory unit or units. An expansion memory 674 may also be provided and connected to the mobile computing device 650 through an expansion interface 672, which may include, for example, a SIMM (Single In Line Memory Module) card interface. The expansion memory 674 may provide extra storage space for the mobile computing device 650, or may also store applications or other information for the mobile computing device 650. Specifically, the expansion memory 674 may include instructions to carry out or supplement the processes described above, and may include secure information also. Thus, for example, the expansion memory 674 may be provide as a security module for the mobile computing device 650, and may be programmed with instructions that permit secure use of the mobile computing device 650. In addition, secure applications may be provided via the SIMM cards, along with additional information, such as placing identifying information on the SIMM card in a non-hackable manner.

The memory may include, for example, flash memory and/or NVRAM memory (non-volatile random access memory), as discussed below. In some implementations, instructions are stored in an information carrier. that the instructions, when executed by one or more processing devices (for example, processor 652), perform one or more methods, such as those described above. The instructions can also be stored by one or more storage devices, such as one or more computer- or machine-readable mediums (for example, the memory 664, the expansion memory 674, or memory on the processor 652). In some implementations, the instructions can be received in a propagated signal, for example, over the transceiver 668 or the external interface 662.

The mobile computing device 650 may communicate wirelessly through the communication interface 666, which may include digital signal processing circuitry where necessary. The communication interface 666 may provide for communications under various modes or protocols, such as GSM voice calls (Global System for Mobile communications), SMS (Short Message Service), EMS (Enhanced Messaging Service), or MMS messaging (Multimedia Messaging Service), CDMA (code division multiple access), TDMA (time division multiple access), PDC (Personal Digital Cellular), WCDMA (Wideband Code Division Multiple Access), CDMA2000, or GPRS (General Packet Radio Service), among others. Such communication may occur, for example, through the transceiver 668 using a radio-frequency. In addition, short-range communication may occur, such as using a Bluetooth, WiFi, or other such transceiver (not shown). In addition, a GPS (Global Positioning System) receiver module 670 may provide additional navigation- and location-related wireless data to the mobile computing device 650, which may be used as appropriate by applications running on the mobile computing device 650.

The mobile computing device 650 may also communicate audibly using an audio codec 660, which may receive spoken information from a user and convert it to usable digital information. The audio codec 660 may likewise generate audible sound for a user, such as through a speaker, e.g., in a handset of the mobile computing device 650. Such sound may include sound from voice telephone calls, may include recorded sound (e.g., voice messages, music files, etc.) and may also include sound generated by applications operating on the mobile computing device 650.

The mobile computing device 650 may be implemented in a number of different forms, as shown in the figure. For example, it may be implemented as a cellular telephone 680. It may also be implemented as part of a smart-phone 682, personal digital assistant, tablet or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms machine-readable medium and computer-readable medium refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term machine-readable signal refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing system that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network (LAN), a wide area network (WAN), and the Internet.

The computing system can include clients and servers. A client and server are generally remote from each other and typically interact through a communication network. The relationship of client and server arises by virtue of computer programs running on the respective computers and having a client-server relationship to each other.

Although a few implementations have been described in detail above, other modifications are possible. For example, while a client application is described as accessing the delegate(s), in other implementations the delegate(s) may be employed by other applications implemented by one or more processors, such as an application executing on one or more servers. In addition, the logic flows depicted in the figures do not require the particular order shown, or sequential order, to achieve desirable results. In addition, other actions may be provided, or actions may be eliminated, from the described flows, and other components may be added to, or removed from, the described systems.

While the embodiments have been described with reference to examples, those skilled in the art will be able to make various modifications to the described embodiments without departing from the scope of the claimed embodiments.

## Claims

1. A computer network for secure processing of a request from a mobile application (107) on a mobile computing device (105), comprising:
a first communications channel (150b) over which an electronic transactions cloud (110) receives the request from the mobile application (107) for processing an electronic transaction between a first entity (103) and a second entity (104) and over which a request for validation of a secure transaction code for processing the electronic transaction is received from the mobile application (107);
a second communications channel (150c).over which variable data from the request from the mobile application (107) for processing the electronic transaction is verified based on corresponding variable data from a data store (109) of the first entity (103);
a third communications channel (150d) over which instructions to process the electronic transaction are sent to an electronic data store (112) of the second entity (104) and the secure transaction code is sent to the electronic data store (112) of the second entity (104) for validation;
wherein if the secure transaction code is valid, the electronic transactions cloud (110) receives a receipt confirming completion of the electronic transaction from the electronic data store (112) via the third communications channel (150d) and, if the secure transaction code is not valid, the electronic transactions cloud (110) receives an error message from the electronic data store (112) indicating the secure transaction code is invalid via the third communications channel (150d).

2. The network of claim 1, further comprising a fourth communications channel (150g) over which the electronic transactions cloud (110) sends a notification confirming completion of the electronic transaction to a second user (102) associated with the second entity (104) if the secure transaction code is valid and sends a notification indicating the secure transaction code is invalid to the second user (102) associated with the second entity (104) if the secure transaction code is invalid.

3. The network of claims 1 or 2, wherein the first communications channel (150b) connects the electronic transactions cloud (110) and the mobile application (107) on the mobile device (105) of the first user (101).

4. The network of any of the preceding claims, wherein the second communications channel (150c) connects the electronic transactions cloud (110) and the data store of the first entity (103).

5. The network of any of the preceding claims, wherein the third communications channel (150d) connects the electronic transactions cloud (110) and the electronic data store (112) of the second entity (104).

6. An electronic transactions cloud (110), comprising:
a first communications channel (150b) providing communications to a mobile application (107) on a mobile device (105) of a first user (101);
a second communications channel (150c) providing communications to a data store of a first entity (103); and
a third communications channel (150d) providing communications to an electronic data store (112) of a second entity (104),
the electronic transactions cloud (110) performing the steps of:
receiving a request from a mobile application (107) residing on a mobile device (105) of a first user (101) over the first communications channel (150b) for processing an electronic transaction between the first entity (103) and the second entity (104), over the first communications channel (150b);
verifying variable data from the received request;
instructing, over the third communications channel (150d), the electronic data store (112) of the second entity (104) to process said electronic transaction, if the variable data from the received request is verified;
in response to said instructing, receiving a request for validation of a secure transaction code from the mobile application (107) of the mobile device (105) over the second communications channel (150c);
determining whether the secure transaction code from the request for validation is valid; and
receiving, over the third communications channel (150d), a receipt if the secure transaction code is valid, and receiving, over the third communications channel (150d), an error message if the secure transaction code is invalid.

7. The electronic transactions cloud (110) of claim 6, wherein verifying variable data from the received request further comprises:
extracting the variable data from the received request;
retrieving corresponding variable data from the data store, over the second communications channel (150c); and
comparing the retrieved corresponding variable data with extracted variable data.

8. The electronic transactions cloud (110) of claim 7, wherein the variable data is verified if the retrieved corresponding variable data matches the extracted variable data.

9. The electronic transactions cloud (110) of any of claims 6-8, wherein determining whether the secure transaction code from the request for validation is valid further comprises:
extracting said secure transaction code from the request for validation;
sending said secure transaction code to said electronic data store (112) over the third communications channel (150d); and
receiving from said electronic data store (112) information as to whether the secure code is valid over the third communications channel (150d).

10. The electronic transactions cloud (110) of any of claims 6-8, further comprising:
sending, over a fourth communications channel (150g), a notification confirming completion of the electronic transaction to a second user (102) associated with the second entity (104) if the secure transaction code is valid, and sending, over the fourth communications channel (150g), a notification indicating the secure transaction code is invalid to the second user (102) associated with the second entity (104) if the secure transaction code is invalid.

11. A computer-implemented method comprising the steps of:
receiving a request from a mobile application (107) residing on a mobile device (105) of a first user (101) for processing an electronic transaction between a first entity (103) and a second entity (104);
verifying variable data from the received request;
instructing an electronic data store (112) of the second entity (104) to process said electronic transaction, if the variable data from the received request is verified;
in response to said instructing, receiving a request for validation of a secure transaction code from the mobile application (107) of the mobile device (105);
determining whether the secure transaction code from the request for validation is valid; and
receiving a receipt if the secure transaction code is valid, and receiving an error message if the secure transaction code is invalid.

12. The computer-implemented method of claim 11, wherein verifying variable data from the received request further comprises:
extracting variable data from the received request;
retrieving corresponding variable data from a data store of the first entity (103); and
comparing the retrieved corresponding variable data with extracted variable data.

13. The computer-implemented method of claim 12, wherein the variable data is verified if the retrieved corresponding variable data matches the extracted variable data.

14. The computer-implemented method of any of claims 11-13, wherein determining whether the secure transaction code from the request for validation is valid further comprises:
extracting said secure transaction code from the request for validation;
sending said secure transaction code to said electronic data store (112); and
receiving from said electronic data store (112) information as to whether the secure code is valid.

15. The computer-implemented method of any of claims 11-14, further comprising:
sending a notification confirming completion of the electronic transaction to a second user (102) associated with the second entity (104) if the secure transaction code is valid, and sending a notification indicating the secure transaction code is invalid to the second user (102) associated with the second entity (104) if the secure transaction code is invalid.
